# EUROPEAN PATENT APPLICATION

(11) **EP 4 738 507 A1**
(43) Date of publication of application: **06.05.2026**
(21) Application number: 25197532.2
(22) Date of filing: 22.08.2025
(51) Int. Cl.: H01M 10/0562

(54) **SOLID ELECTROLYTE MEMBRANE AND PREPARATION METHOD AND APPLICATION THEREOF**

(30) Priority: 31.10.2024 CN 202411545102
(71) Applicant: AESC Japan Ltd., Yokohama-Shi, Kanagawa 220-0012 (JP)
(72) Inventor: YU, Le, Pudong New Area Shanghai, Shanghai 201315 (CN); WU, Ming, Pudong New Area Shanghai, Shanghai 201315 (CN)
(74) Representative: Becker, Eberhard

(57) **Abstract**

The invention provides a solid electrolyte membrane and a preparation method and application thereof, wherein the solid electrolyte membrane includes a binder; and a sulfide solid electrolyte, and a molecular formula of the sulfide solid electrolyte is LiₐP_{1-b}M_{b}S_{c}O_{d}Xₑ; wherein 5<a<6, 0<b<1, 1.5<c<5, 0<d<2.5, 4<c+d<5, 1<e<2; M is selected from one or a plurality of Al, Ga, In, Ti, Sc, As, Sb, Bi, As, V, or Nb; X is selected from one or a plurality of Cl, Br, or I; and an ionic conductivity of the solid electrolyte membrane is 1×10⁻³ S/cm to 2×10⁻² S/cm. The invention provides a solid electrolyte membrane and a preparation method and application thereof to improve the stability of the conductivity of the solid electrolyte membrane, enhance air stability, improve electrolyte/active material interface properties, and improve the life and the safety of the all-solid-state lithium-ion battery.

## Description

### BACKGROUND OF THE INVENTION

### Field of the Invention

The invention relates to the technical field of lithium-ion batteries, and in particular to a solid electrolyte membrane and a preparation method and application thereof.

### Description of Related Art

At present, lithium-ion batteries are widely used in fields such as portable electronic apparatus, electric vehicles, and energy storage systems. However, traditional lithium-ion batteries use flammable organic liquid electrolytes, which have the drawbacks of safety risks and lower energy density, thus limiting the further development thereof. All-solid-state lithium batteries use solid electrolytes instead of liquid electrolytes, have higher safety, wider operating temperature range, and higher energy density, and are an important development direction of the next generation of battery techniques.

Sulfide solid electrolytes have become one of the most promising electrolyte materials of all-solid-state lithium batteries due to the high ionic conductivity and good mechanical properties thereof. However, most sulfide electrolytes are readily decomposed in the air to generate toxic hydrogen sulfide gas, and the production conditions are strict, thus increasing the complexity and the cost of production. In addition, sulfide electrolytes have worse compatibility with lithium metal negative electrodes, and are prone to interfacial reactions, inducing the formation of lithium dendrites and causing battery short circuits.

### SUMMARY OF THE INVENTION

The invention provides a solid electrolyte membrane and a preparation method and application thereof. The solid electrolyte membrane and the preparation method and application thereof provided by the invention may improve the stability of the electrical conductivity of the solid electrolyte membrane, enhance air stability, improve electrolyte/active material interface properties, and improve the life and the safety of the all-solid-state lithium-ion battery.

In order to solve the above technical issues, the invention provides a solid electrolyte membrane, at least including:
a binder; and
a sulfide solid electrolyte, wherein a molecular formula of the sulfide solid electrolyte is LiₐP_{1-b}M_{b}S_{c}O_{d}Xₑ; wherein 5<a<6, 0<b<1, 1.5<c<5, 0<d<2.5, 4<c+d<5, 1<e<2; M is selected from one or a plurality of Al, Ga, In, Ti, Sc, As, Sb, Bi, As, V, or Nb; X is selected from one or a plurality of Cl, Br, or I;
an ionic conductivity of the solid electrolyte membrane is 1×10⁻³ S/cm to 2×10⁻² S/cm.

In an embodiment of the invention, M is one or a plurality of Sb, In, or Bi.

In an embodiment of the invention, X is Cl; a value range of b is 0<b≤0.1.

In an embodiment of the invention, a thickness of the solid electrolyte membrane is 1 µm to 200 µm.

In an embodiment of the invention, a mass ratio of the binder to the sulfide solid electrolyte is 0.1:99.9 to 10:90.

The invention also provides a preparation method of the above solid electrolyte membrane, including steps of:
mixing raw materials evenly according to a stoichiometric amount, and then placing in a ball mill for ball milling according to a chemical formula of a sulfide solid electrolyte to obtain a sulfide solid electrolyte precursor powder;
calcining the sulfide solid electrolyte precursor powder at a preset temperature to obtain the sulfide solid electrolyte; and
mixing the sulfide solid electrolyte with a binder, and the solid electrolyte membrane is prepared by a dry method or prepared by a wet method.

In an embodiment of the invention, the raw materials include a Li source, a P source, an M source, a S source, and an X source, the Li source is selected from one or a plurality of LiCl, LiBr, LiI, or Li₂S; the P source is selected from one or a plurality of elemental P, P₂S₅, P₄S₆, PCl₅, or PBr₅; the M source is selected from one or a plurality of an oxide of M or a sulfide of M; the S source is selected from one or a plurality of elemental S, Li₂S, P₂S₅, P₄S₆, As₂S₅, As₂S₃, Sb₂S₅, Sb₂S₃, Bi₂S₅, Bi₂S₃, Al₂S₃, Ga₂S₃, In₂S₃, or Sc₂S₃ ; the X source is selected from one or a plurality of LiCl, PCl₅, LiBr, PBr₅, LiI, or I₂; the O element in the chemical formula comes from the oxide of M.

In an embodiment of the invention, when the solid electrolyte membrane is prepared by the dry method, the binder is selected from a first binder, and the first binder is selected from one or several of polytetrafluoroethylene, ethylene-tetrafluoroethylene copolymer, fluorinated ethylene-propylene copolymer, perfluoroalkoxy resin, polychlorotrifluoroethylene, ethylene-chlorotrifluoroethylene copolymer, polyvinylidene fluoride, polyvinylidene fluoride-hexafluoropropylene copolymer, or polyvinylidene fluoride-chlorotrifluoroethylene copolymer.

In an embodiment of the invention, when the solid electrolyte membrane is prepared by the wet method, the binder is selected from a second binder, and the second binder is selected from one or a plurality of polyvinylidene fluoride, carboxymethyl cellulose, styrene-butadiene rubber, polyvinyl pyrrolidone, polymethyl methacrylate, polyacrylonitrile, polyacrylic acid, polyurethane, polyvinyl alcohol, sodium alginate, ethylene-propylene-diene monomer, styrene-butadiene rubber, fluororubber, *β*-cyclodextrin polymer, polypropylene emulsion, polytetrafluoroethylene, ethylene-tetrafluoroethylene copolymer, fluorinated ethylene-propylene copolymer, perfluoroalkoxy resin, polychlorotrifluoroethylene, ethylene-chlorotrifluoroethylene copolymer, polyvinylidene fluoride-hexafluoropropylene copolymer, or polyvinylidene fluoride-chlorotrifluoroethylene copolymer.

The invention also provides an all-solid-state lithium-ion battery, at least including:
a positive electrode sheet, wherein the positive electrode sheet includes a halide solid electrolyte, and the halide solid electrolyte includes Li_{2.35}Zr_{0.65}Fe_{0.35}Cl₅Br_{0.5}I_{0.5};
a negative electrode sheet; and
a solid electrolyte membrane, wherein the solid electrolyte membrane is disposed between the adjacent positive electrode sheet and the negative electrode sheet, and the solid electrolyte membrane is selected from the solid electrolyte membrane.

The invention also provides an electronic apparatus, including the all-solid-state lithium-ion battery.

Based on the above, the invention provides the solid electrolyte membrane and the preparation method and application thereof, thus increasing the intrinsic resistance of the solid electrolyte membrane to atmospheric degradation, effectively reducing the generation of H₂S, increasing the possibility of the battery in actual production, and thus enhancing the air stability and the chemical stability of the sulfide solid electrolyte. LiCl, Li₂O, and alloys such as Li-Sb/Li-Bi/Li-In may be formed in the electrolyte/lithium metal negative electrode interface layer, so that the electric field is uniform and the local current density may be balanced, thereby regulating the nucleation and the growth of Li, so as to effectively inhibit the rapid growth of lithium dendrites at the growth interface, significantly improve the stability and the performance of the lithium-ion battery, and improve the life and the safety of the all-solid-state lithium-ion battery. Therefore, the solid electrolyte membrane has higher stability and specific reactivity to improve the stability of the conductivity of the solid electrolyte membrane, enhance air stability and improve electrolyte/active material interface properties, thereby improving compatibility with the active material.

### BRIEF DESCRIPTION OF THE DRAWINGS

In order to more clearly illustrate the technical solutions of the examples of the invention, the accompanying drawings needed for describing the examples are briefly introduced below. Obviously, the accompanying drawings described below are only some examples of the invention. For those skilled in the art, other accompanying drawings may be obtained according to these accompanying drawings without inventive step effort.
FIG. 1 is a schematic diagram of a process of preparing a solid electrolyte membrane by a dry method in an embodiment of the invention.
FIG. 2 is a performance diagram of the all-solid-state lithium-ion battery in Example 3 subjected to 1C/1C long cycle at room temperature.

### DESCRIPTION OF THE EMBODIMENTS

The following describes the examples of the invention through specific examples, and those skilled in the art may readily understand other advantages and effects of the invention from the contents disclosed in this specification. The invention may also be implemented or applied through other different specific examples, and each detail in this specification may also be modified or changed in various ways based on different viewpoints and applications without departing from the spirit of the invention.

It should be understood that the invention may be implemented in different forms and should not be interpreted as limited to the examples set forth herein. On the contrary, these examples are provided to make the disclosure thorough and complete and to fully convey the scope of the invention to those skilled in the art.

The technical solution of the invention is further described in detail below in conjunction with several examples. Obviously, the described examples are only part of the examples of the invention, not all of the examples. Based on the examples of the invention, all other examples obtained by those skilled in the art without inventive step effort are within the scope of protection of the invention.

The invention provides a solid electrolyte membrane. The solid electrolyte membrane includes a binder and a sulfide solid electrolyte, wherein the molecular formula of the sulfide solid electrolyte is LiₐP_{1-b}M_{b}S_{c}O_{d}Xₑ, and 5<a<6, 0<b<1, 1.5<c<5, 0<d<2.5, 4<c+d<5, 1<e<2; M is selected from one or a plurality of Al, Ga, In, Ti, Sc, As, Sb, Bi, As, V, or Nb, etc.; and X is selected from one or a plurality of Cl, Br, or I. In particular, introducing an M element and an O element into the halogen-rich sulfide solid electrolyte forms P-O and M-S bonds in the crystal structure, thereby increasing the intrinsic resistance to atmospheric degradation, effectively reducing the generation of H₂S, enhancing the stability of the sulfide solid electrolyte, including stability to lithium and stability to air, and facilitating the preparation and the operation of the sulfide solid electrolyte. In addition, when the sulfide solid electrolyte is used to assemble an all-solid-state lithium-ion battery, LiCl, Li₂O, and alloys such as Li-Sb/Li-Bi/Li-In may be formed in the electrolyte/lithium metal negative electrode interface layer. In particular, Li₂O has a higher intrinsic ionic conductivity, and alloys such as Li-Sb/Li-Bi/Li-In may promote the rapid transfer kinetics of Li⁺, make the electric field uniform, and balance the local current density, thereby regulating the nucleation and the growth of Li. In addition, LiCl has higher interfacial energy to effectively inhibit the rapid growth of lithium dendrites at the growth interface, so as to significantly improve the stability and the performance of the lithium-ion battery, and improve the life and the safety of the all-solid-state lithium-ion battery.

In an embodiment of the invention, M is selected from one or a plurality of Sb, In, or Bi, for example. Since the ionic radius of Sb, In, or Bi is moderate, and the ionic radius of these elements is close to the ionic radius of the main elements in the sulfide electrolyte, such as sulfur and phosphorus, etc., they may more readily replace the position of the main elements when doped without causing excessive lattice distortion. In addition, Sb, In, or Bi has moderate electronegativity, and may form a stable chemical bond with the sulfur element in the sulfide, which is difficult to be damaged by external influences, so that the sulfide solid electrolyte has higher stability and specific reactivity, and may improve the stability of the conductivity of the sulfide solid electrolyte, enhance air stability and improve electrolyte/active material interface properties, thereby improving the compatibility with the active material.

In an embodiment of the invention, X is selected from a halogen element, and depending on the halogen, the degree of anion disorder between the 4a and 4c sites in the crystal structure of the sulfide solid electrolyte is different, ranging from a small amount of anti-site defects when X is I to 60% site disorder when X is Cl, and the lithium conductivity of these compounds mainly depends on the degree of disorder occupied by the anion and cation sites. Therefore, X is selected from Cl, for example, to improve the ionic conductivity and the electrochemical stability of the sulfide solid electrolyte and improve voltage stability. The value range of b is 0<b≤0.1. In a specific embodiment of the invention, when M is +5 valence, b is optimally 0.04, and when M is +3 valence, b is optimally 0.02, so as to improve the cycle performance of the lithium-ion battery.

In an embodiment of the invention, the thickness of the solid electrolyte membrane is, for example, 1 µm to 200 µm, and the ionic conductivity is, for example, 1×10⁻³ S/cm to 2×10⁻² S/cm, and the ionic conductivity is more stable at low temperature, and the solid electrolyte membrane may be prepared in batches in a dry room with a low dew point, thus significantly simplifying preparation process and reducing preparation cost. In addition, the solid electrolyte membrane provided by the present application may be well matched with a lithium metal negative electrode, and a high-energy-density and high-performance all-solid-state lithium battery may be prepared.

In an embodiment of the invention, the mass ratio of the binder to the sulfide solid electrolyte is 0.1:99.9 to 10:90, and the binder is selected from one of the first binder and the second binder. The first binder is selected from one or several of polytetrafluoroethylene (PTFE), ethylene-tetrafluoroethylene copolymer (ETFE), fluorinated ethylene propylene copolymer (FEP), perfluoroalkoxy resin (PFA), polychlorotrifluoroethylene (PCTFE), ethylene-chlorotrifluoroethylene copolymer (ECTFE), polyvinylidene fluoride (PVDF), polyvinylidene fluoride-hexafluoropropylene copolymer, or polyvinylidene fluoride-chlorotrifluoroethylene copolymer, etc. The second binder is selected from at least one or a plurality of PVDF, carboxymethyl cellulose (CMC), styrene butadiene rubber (SBR), polyvinyl pyrrolidone (PVP), polymethyl methacrylate (PMMA), polyacrylonitrile (PAN), polyacrylic acid (PAA), polyurethane, polyvinyl alcohol (PVA), sodium alginate (Alg), ethylene-propylene-diene monomer, styrene-butadiene rubber, fluororubber, *β*-cyclodextrin polymer (*β*-cyclodextrin, *β-*CDp), polypropylene emulsion (LA132), PTFE, ETFE, FEP, PFA, PCTFE, ECTFE, polyvinylidene fluoride-hexafluoropropylene copolymer, or vinylidene fluoride-chlorotrifluoroethylene copolymer, etc. By adding the binder, the processability of the solid electrolyte membrane may be improved, the volume expansion may be alleviated, and the structure of the solid electrolyte membrane may be stabilized.

The invention also provides a preparation method of a solid electrolyte membrane used to prepare the above solid electrolyte membrane, and at least includes: mixing raw materials evenly according to the stoichiometric ratio and placing in a ball mill for ball milling according to the chemical formula of a sulfide solid electrolyte to obtain a sulfide solid electrolyte precursor powder; calcining the sulfide solid electrolyte precursor powder at a preset temperature to obtain a sulfide solid electrolyte; mixing the sulfide solid electrolyte with a binder, and a solid electrolyte membrane is prepared by a dry method or a wet method.

In an embodiment of the invention, according to the chemical formula of the sulfide solid electrolyte LiₐP_{1-b}M_{b}Sc_{O}dXₑ, a Li source, a P source, an M source, an S source, and an X source are evenly mixed according to a stoichiometric ratio, wherein the Li source is selected from one or a plurality of LiCl, LiBr, LiI, or Li₂S, the P source is selected from one or a plurality of elemental P, P₂S₅, P₄S₆, PCl₅, or PBr₅, the M source is selected from one or a plurality of an oxide of M or a sulfide of M, the S source is selected from one or a plurality of elemental S, Li₂S, P₂S₅, P₄S₆, As₂ S₅, As₂S₃, Sb₂S₅, Sb₂S₃, Bi₂S₅, Bi₂S₃, Al₂S₃, Ga₂S₃, In₂S₃, or Sc₂S₃, etc., and the X source is selected from one or a plurality of LiCl, PCl₅, LiBr, PBr₅, LiI, or I₂, etc., and the O element in the chemical formula comes from the oxide of M. After the raw materials are evenly mixed, they are placed in a ball mill and ball milled in an inert gas atmosphere, wherein the ball-to-material ratio is, for example, 1:1 to 100:1, the ball milling speed is, for example, 50 rpm to 1500 rpm, and the ball milling time is, for example, 1 h to 48 h, to obtain a sulfide solid electrolyte precursor powder.

In an embodiment of the invention, the sulfide solid electrolyte precursor powder is calcined at a preset temperature, wherein the preset temperature is 400 °C to 600 °C and the calcination time is 1 h to 18 h to obtain the sulfide solid electrolyte.

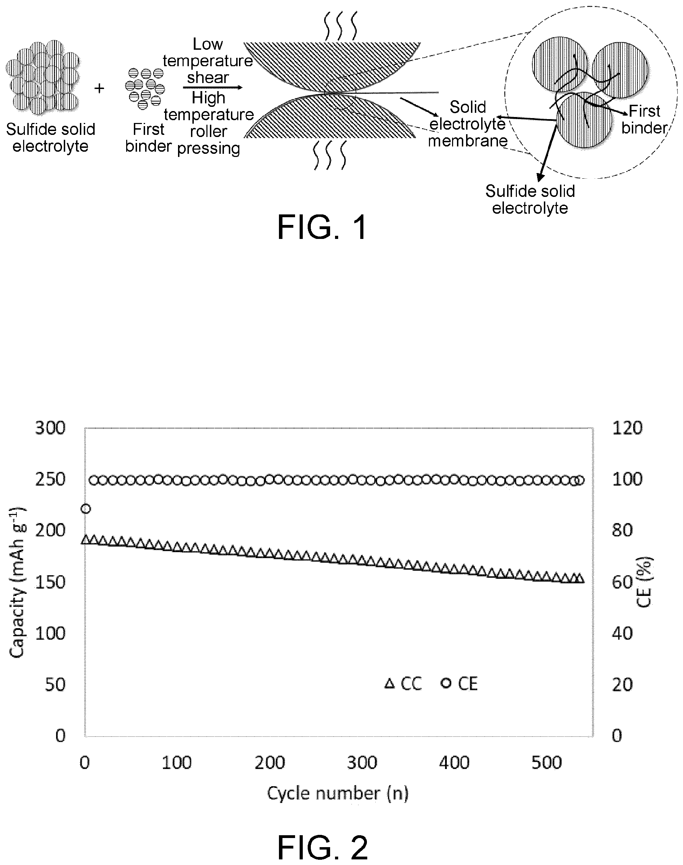

Please refer to FIG. 1. In an embodiment of the invention, when the solid electrolyte membrane is prepared by a dry method, for example, a powder extrusion molding method is used, and the binder is selected from the first binder. Specifically, after the sulfide solid electrolyte and the first binder are mixed evenly by low-temperature shearing, the mixture is quickly heated for high-temperature shearing mixing to obtain a mixed material, and the mixed material is added to a roller press for high-temperature roll pressing to obtain a solid electrolyte membrane. In particular, the mass ratio of the first binder to the sulfide solid electrolyte is, for example, 0.1:99.9 to 5:95, the temperature of low-temperature shearing is, for example, -30 °C to 15 °C, the temperature of high-temperature shearing is, for example, 20 °C to 200 °C, and the temperature of high-temperature roll pressing is, for example, 20 °C to 200 °C. In the dry preparation process, the first binder is wrapped around the sulfide solid electrolyte in a network shape to improve the mechanical strength and the chemical stability of the solid electrolyte membrane, and maintain stable contact between the electrolyte and the electrode material during the battery charging and discharging process, thereby improving the performance and the life of the battery.

In an embodiment of the invention, when the solid electrolyte membrane is prepared by a wet method, for example, a wet coating method and an electrostatic spraying method, etc., the binder is selected from the second binder. Specifically, the sulfide solid electrolyte, the second binder, and the solvent are mixed evenly to obtain an electrolyte slurry, and then the electrolyte slurry is coated on the substrate by a wet coating or electrostatic spraying method, and then the substrate coated with the electrolyte slurry is dried and peeled off to obtain a solid electrolyte membrane. In particular, the solvent is, for example, selected from at least one of toluene, chlorobenzene, xylene, dimethyl carbonate, N-methylformamide, n-hexane, glycol dimethyl ether, dibutyl ether, ethanol, 1,2-ethylenediamine, 1,2-ethanedithiol, acetonitrile, tetrahydrofuran, methanol, isopropyl ether, acetone, hexene, ethyl acetate, benzyl acetate, butyl butyrate, or diisobutyl ketone, etc. In the electrolyte slurry, the content of the sulfide solid electrolyte is, for example, 30 wt% to 90 wt%, the content of the second binder is, for example, 0.1 wt% to 10 wt%, the content of the solvent is, for example, 10 wt% to 50 wt%, and after drying, the mass ratio of the second binder to the sulfide solid electrolyte is, for example, 0.1:30 to 10:90. The substrate is, for example, selected from polyethylene glycol terephthalate (PET) film, smooth aluminum foil, or release paper, etc., for easy demoulding, and the drying temperature is, for example, 30 °C to 250 °C.

The invention also provides an all-solid-state lithium-ion battery, including a positive electrode sheet, a negative electrode sheet, and a solid electrolyte membrane. The solid electrolyte membrane is disposed between adjacent positive electrode sheet and negative electrode sheet. In particular, the positive electrode sheet includes a positive electrode active material and a halide solid electrolyte, the positive electrode active material is selected from one or a plurality of lithium nickel cobalt manganese oxide (NCM), lithium nickel oxide (LNO), lithium manganese oxide (LMO), lithium nickel manganese oxide (LNMO), lithium cobalt oxide (LCO), or lithium nickel cobalt aluminum oxide (NCA), etc. The halide solid electrolyte includes Li_{2.35}Zr_{0.65}Fe_{0.35}Cl₅Br_{0.5}I_{0.5}, and the halide solid electrolyte does not generate heat with the de-lithium positive electrode active material, thereby improving the safety of the lithium-ion battery. The negative electrode sheet is, for example, one or a plurality of a metal lithium sheet, a metal indium sheet, or a lithium indium alloy sheet, etc., and the negative electrode sheet includes, for example, a negative electrode active material, and the negative electrode active material is selected from one or a plurality of a graphite material, a silicon material, or a composite material of a graphite material and a silicon material, etc. The solid electrolyte membrane is selected from the above solid electrolyte membrane to improve the performance of the all-solid-state lithium-ion battery.

In an embodiment of the invention, the positive electrode sheet also includes a conductive agent and a binder, wherein the conductive agent is, for example, one or a combination of at least two of conductive carbon black (Super P, SP), carbon nanotube (CNT), vapor grown carbon fiber (VGCF), or graphene, etc., and the binder is, for example, polytetrafluoroethylene (PTFE) and a derivative thereof, etc. The mass ratio of the positive electrode active material, the halide solid electrolyte, the conductive agent, and the binder is, for example, (65 to 78): (20 to 30): (1 to 3): (1 to 2). In the present embodiment, the mass ratio of the positive electrode active material, the halide solid electrolyte, the conductive agent, and the binder is, for example, 69:29:1:1, and the conductive agent is a combination of conductive carbon black (super-P) and vapor grown carbon fiber (VGCF), and the mass ratio of the conductive carbon black to the vapor grown carbon fiber is 1:1, and the binder is, for example, polytetrafluoroethylene. The positive electrode active material, the halide solid electrolyte, the conductive agent, and the binder are evenly mixed to obtain a mixed powder, and a positive electrode sheet is obtained by pressing with a dry method.

In an embodiment of the invention, when the negative electrode sheet includes a negative electrode active material, the negative electrode sheet also includes a solid electrolyte, a conductive agent, and a binder, etc., wherein the solid electrolyte is, for example, a halide solid electrolyte or a sulfide electrolyte, etc., and the present application does not make specific restrictions. The binder is, for example, at least one of polyisoprene, polyethylene, or polypropylene, etc., and the conductive agent is, for example, at least one of carbon nanotube, carbon fiber, or acetylene black. The present application does not limit the ratio of the negative electrode active material, the conductive agent, and the binder, which are selected according to manufacturing requirements, and the negative electrode sheet is, for example, obtained by pressing with a dry method.

In an embodiment of the invention, the negative electrode sheet is, for example, a metal lithium sheet, and the positive electrode sheet, the solid electrolyte membrane, and the negative electrode sheet are sequentially stacked, packaged, hot pressed, and cold pressed, and then wrapped with an aluminum plastic film, etc., under vacuum or an inert atmosphere to obtain an all-solid-state soft-package lithium-ion battery. In particular, the assembly process of the all-solid-state lithium-ion battery is, for example, completed in a glove box with an argon atmosphere.

Hereinafter, the invention is explained in more detail by citing examples, and these examples should not be construed as limiting. Appropriate modifications may be made within the scope consistent with the gist of the invention, all of which fall within the technical scope of the invention.

### Example 1

Preparation of sulfide solid electrolyte: 2 mol of Li₂S, 1.5 mol of LiCl, 0.48 mol of P₂S₅, and 0.02 mol of Sb₂O₅ were milled by high-energy ball milling to obtain precursor powder, wherein the ball-to-material ratio was 30:1 and the rotation speed was 500 rpm. The precursor powder was sintered at 500 °C for 10 h and cooled to obtain Li_{5.5}P_{0.96}Sb_{0.04}S_{4.40}O_{0.10}Cl_{1.5} sulfide solid electrolyte.

Preparation of solid electrolyte membrane: the electrolyte Li_{5.5}P_{0.96}Sb_{0.04}S_{4.40}O_{0.10}Cl_{1.5} and PTFE were evenly mixed at a mass ratio of 99:1 at -20 °C, and the temperature was raised to 80 °C for mixing to fiberize the PTFE to obtain a mixed material. The mixed material was extruded into a roller press, and the solid electrolyte membrane was roll-pressed to a thickness of 5 µm at 80 °C by adjusting the gap of the roller press.

Preparation of positive electrode sheet: LiNi_{0.8}Co_{0.1}Mn_{0.1}O₂, conductive agent, Li_{2.35}Zr_{0.65}Fe_{0.35}Cl₅Br_{0.5}I_{0.5}, and PTFE were mixed in a mass ratio of 69:1:29:1 to form a positive electrode sheet by a dry method. The conductive agent was super-P and VGCF in a mass ratio of 1:1.

Negative electrode sheet: the negative electrode sheet was made of metal lithium sheet.

Assembly of all-solid-state battery: the positive electrode sheet, solid electrolyte membrane, and negative electrode sheet prepared above were stacked, packaged, hot-pressed, and cold-pressed to form the all-solid-state soft-pack battery.

Assembly of symmetrical battery: the counter electrode Li was placed at two sides of the solid electrolyte membrane and assembled with the solid electrolyte membrane into a Li/Li symmetrical battery.

### Example 2

By adjusting the roller gap of the roller press, the thickness of the solid electrolyte membrane was prepared to be 10 µm, and other operations were consistent with Example 1.

### Example 3

By adjusting the roller gap of the roller press, the thickness of the solid electrolyte membrane was prepared to be 30 µm. Other operations were consistent with Example 1.

### Example 4

By adjusting the roller gap of the roller press, the thickness of the solid electrolyte membrane was prepared to be 50 µm, and other operations were consistent with Example 1.

### Example 5

By adjusting the roller gap of the roller press, the thickness of the solid electrolyte membrane was prepared to be 100 µm, and other operations were consistent with Example 1.

### Example 6

By adjusting the roller gap of the roller press, the thickness of the solid electrolyte membrane was prepared to be 200 µm, and other operations were consistent with Example 1.

### Example 7

The chemical formula of the sulfide solid electrolyte prepared by 2 mol of Li₂S, 1.5 mol of LiCl, 0.495 mol of P₂S₅, and 0.005 mol of Sb₂O₅ was Li_{5.5}P_{0.99}Sb_{0.01}S_{4.475}O_{0.025}Cl_{1.5}. Other operations were consistent with Example 3.

### Example 8

The chemical formula of the sulfide solid electrolyte prepared by 2 mol of Li₂S, 1.5 mol of LiCl, 0.49 mol of P₂S₅, and 0.01 mol of Sb₂O₅ was Li_{5.5}P_{0.98}Sb_{0.02}S_{4.45}O_{0.05}Cl_{1.5}. Other operations were consistent with Example 3.

### Example 9

The chemical formula of the sulfide solid electrolyte prepared by 2 mol of Li₂S, 1.5 mol of LiCl, 0.47 mol of P₂S₅, and 0.03 mol of Sb₂O₅ was Li_{5.5}P_{0.94}Sb_{0.06}S_{4.35}O_{0.15}Cl_{1.5}. Other operations were consistent with Example 3.

### Example 10

The chemical formula of the sulfide solid electrolyte prepared by 2 mol of Li₂S, 1.5 mol of LiCl, 0.46 mol of P₂S₅, and 0.04 mol of Sb₂O₅ was Li_{5.5}P_{0.92}Sb_{0.08}S_{4.3}O_{0.20}Cl_{1.5}. Other operations were consistent with Example 3.

### Example 11

The chemical formula of the sulfide solid electrolyte prepared by 2 mol of Li₂S, 1.5 mol of LiCl, 0.45 mol of P₂S₅, and 0.05 mol of Sb₂O₅ was Li_{5.5}P_{0.9}Sb_{0.1}S_{4.25}O_{0.25}Cl_{1.5}. Other operations were consistent with Example 3.

### Example 12

The chemical formula of the sulfide solid electrolyte prepared by 1.6 mol of Li₂S, 1.9 mol of LiCl, 0.48 mol of P₂S₅, and 0.02 mol of Sb₂O₅ was Li_{5.1}P_{0.96}Sb_{0.04}S₄O_{0.10}Cl_{1.9}. Other operations were consistent with Example 3.

### Example 13

The chemical formula of the sulfide solid electrolyte prepared by 2.4 mol of Li₂S, 1.1 mol of LiCl, 0.48 mol of P₂S₅, and 0.02 mol of Sb₂O₅ was Li_{5.9}P_{0.96}Sb_{0.04}S_{4.80}O_{0.10}Cl_{1.1}. Other operations were consistent with Example 3.

### Example 14

The chemical formula of the sulfide solid electrolyte prepared by 2 mol of Li₂S, 1.4 mol of LiCl, 0.1 mol of LiBr, 0.48 mol of P₂S₅, and 0.02 mol of Sb₂O₅ was Li_{5.5}P_{0.96}Sb_{0.04}S_{4.40}O_{0.10}Cl_{1.4}Br_{0.1.} Other operations were consistent with Example 3.

### Example 15

The chemical formula of the sulfide solid electrolyte prepared by 2 mol of Li₂S, 1.3 mol of LiCl, 0.1 mol of LiBr, 0.1 mol of LiI, 0.48 mol of P₂S₅, and 0.02 mol of Sb₂O₅ was Li_{5.5}P_{0.96}Sb_{0.04}S_{4.40}O_{0.10}Cl_{1.3}Br_{0.1}I_{0.1.} Other operations were consistent with Example 3.

### Example 16

The chemical formula of the sulfide solid electrolyte prepared by 2.01 mol of Li₂S, 1.5 mol of LiCl, 0.495 mol of P₂S₅, and 0.005 mol of In₂O₃ was Li_{5.52}P_{0.99}In_{0.01}S_{4.485}O_{0.015}Cl_{1.5.} Other operations were consistent with Example 3.

### Example 17

The chemical formula of the sulfide solid electrolyte prepared by 2.015 mol of Li₂S, 1.5 mol of LiCl, 0.4925 mol of P₂S₅, and 0.0075 mol of In₂O₃ was Li_{5.53}P_{0.985}In_{0.015}S_{4.4775}O_{0.0225}Cl_{1.5.} Other operations were consistent with Example 3.

### Example 18

The chemical formula of the sulfide solid electrolyte prepared by 2.02 mol of Li₂S, 1.5 mol of LiCl, 0.49 mol of P₂S₅, and 0.01 mol of In₂O₃ was Li_{5.54}P_{0.98}In_{0.02}S_{4.47}O_{0.03}Cl_{1.5.} Other operations were consistent with Example 3.

### Example 19

The chemical formula of the sulfide solid electrolyte prepared by 2.04 mol of Li₂S, 1.5 mol of LiCl, 0.48 mol of P₂S₅, and 0.02 mol of In₂O₃ was Li_{5.58}P_{0.96}In_{0.04}S_{4.44}O_{0.06}Cl_{1.5.} Other operations were consistent with Example 3.

### Example 20

The chemical formula of the sulfide solid electrolyte prepared by 2.06 mol of Li₂S, 1.5 mol of LiCl, 0.47 mol of P₂S₅, and 0.03 mol of In₂O₃ was Li_{5.62}P_{0.94}In_{0.06}S_{4.41}O_{0.09}Cl_{1.5.} Other operations were consistent with Example 3.

### Example 21

The chemical formula of the sulfide solid electrolyte prepared by 2.08 mol of Li₂S, 1.5 mol of LiCl, 0.46 mol of P₂S₅, and 0.04 mol of In₂O₃ was Li_{5.66}P_{0.92}In_{0.08}S_{4.38}O_{0.12}Cl_{1.5.} Other operations were consistent with Example 3.

### Example 22

The chemical formula of the sulfide solid electrolyte prepared by 2.1 mol of Li₂S, 1.5 mol of LiCl, 0.45 mol of P₂S₅, and 0.05 mol of In₂O₃ was Li_{5.7}P_{0.9}In_{0.1}S_{4.35}O_{0.15}Cl_{1.5.} Other operations were consistent with Example 3.

### Example 23

The chemical formula of the sulfide solid electrolyte prepared by 1.62 mol of Li₂S, 1.9 mol of LiCl, 0.49 mol of P₂S₅, and 0.01 mol of In₂O₃ was Li_{5.14}P_{0.98}In_{0.02}S_{4.07}O_{0.03}Cl_{1.9.} Other operations were consistent with Example 3.

### Example 24

The chemical formula of the sulfide solid electrolyte prepared by 2.42 mol of Li₂S, 1.1 mol of LiCl, 0.49 mol of P₂S₅, and 0.01 mol of In₂O₃ was Li_{5.94}P_{0.98}In_{0.02}S_{4.87}O_{0.03}Cl_{1.1.} Other operations were consistent with Example 3.

### Example 25

The chemical formula of the sulfide solid electrolyte prepared by 2.02 mol of Li₂S, 1.4 mol of LiCl, 0.1 mol of LiBr, 0.49 mol of P₂S₅, and 0.01 mol of In₂O₃ was Li_{5.54}P_{0.98}In_{0.02}S_{4.47}O_{0.03}Cl_{1.4}Br_{0.1.} Other operations were consistent with Example 3.

### Example 26

The chemical formula of the sulfide solid electrolyte prepared by 2.02 mol of Li₂S, 1.3 mol of LiCl, 0.1 mol of LiBr, 0.1 mol of LiI, 0.49 mol of P₂S₅, and 0.01 mol of In₂O₃ was Li_{5.54}P_{0.98}In_{0.02}S_{4.47}O_{0.03}Cl_{1.3}Br_{0.1}I_{0.1.} Other operations were consistent with Example 3.

### Example 27

The chemical formula of the sulfide solid electrolyte prepared by 2.01 mol of Li₂S, 1.5 mol of LiCl, 0.495 mol of P₂S₅, and 0.005 mol of Bi₂O₃ was Li_{5.52}P_{0.99}Bi_{0.01}S_{4.485}O_{0.015}Cl_{1.5.} Other operations were consistent with Example 3.

### Example 28

The chemical formula of the sulfide solid electrolyte prepared by 2.015 mol of Li₂S, 1.5 mol of LiCl, 0.4925 mol of P₂S₅, and 0.0075 mol of Bi₂O₃ was Li_{5.53}P_{0.985}Bi_{0.015}S_{4.4775}O_{0.0225}Cl_{1.5.} Other operations were consistent with Example 3.

### Example 29

The chemical formula of the sulfide solid electrolyte prepared by 2.02 mol of Li₂S, 1.5 mol of LiCl, 0.49 mol of P₂S₅, and 0.01 mol of Bi₂O₃ was Li_{5.54}P_{0.98}Bi_{0.02}S_{4.47}O_{0.03}Cl_{1.5.} Other operations were consistent with Example 3.

### Example 30

The chemical formula of the sulfide solid electrolyte prepared by 2.04 mol of Li₂S, 1.5 mol of LiCl, 0.48 mol of P₂S₅, and 0.02 mol of Bi₂O₃ was Li_{5.58}P_{0.96}Bi_{0.04}S_{4.44}O_{0.06}Cl_{1.5.} Other operations were consistent with Example 3.

### Example 31

The chemical formula of the sulfide solid electrolyte prepared by 2.06 mol of Li₂S, 1.5 mol of LiCl, 0.47 mol of P₂S₅, and 0.03 mol of Bi₂O₃ was Li_{5.62}P_{0.94}Bi_{0.06}S_{4.41}O_{0.09}Cl_{1.5.} Other operations were consistent with Example 3.

### Example 32

The chemical formula of the sulfide solid electrolyte prepared by 2.08 mol of Li₂S, 1.5 mol of LiCl, 0.46 mol of P₂S₅, and 0.04 mol of Bi₂O₃ was Li_{5.66}P_{0.92}Bi_{0.08}S_{4.38}O_{0.12}Cl_{1.5.} Other operations were consistent with Example 3.

### Example 33

The chemical formula of the sulfide solid electrolyte prepared by 2.1 mol of Li₂S, 1.5 mol of LiCl, 0.45 mol of P₂S₅, and 0.05 mol of Bi₂O₃ was Li_{5.7}P_{0.9}Bi_{0.1}S_{4.35}O_{0.15}Cl_{1.5.} Other operations were consistent with Example 3.

### Example 34

The chemical formula of the sulfide solid electrolyte prepared by 1.62 mol of Li₂S, 1.9 mol of LiCl, 0.49 mol of P₂S₅, and 0.01 mol of Bi₂O₃ was Li_{5.14}P_{0.98}Bi_{0.02}S_{4.07}O_{0.03}Cl_{1.9.} Other operations were consistent with Example 3.

### Example 35

The chemical formula of the sulfide solid electrolyte prepared by 2.42 mol of Li₂S, 1.1 mol of LiCl, 0.49 mol of P₂S₅, and 0.01 mol of Bi₂O₃ was Li_{5.94}P_{0.98}Bi_{0.02}S_{4.87}O_{0.03}Cl_{1.1.} Other operations were consistent with Example 3.

### Example 36

The chemical formula of the sulfide solid electrolyte prepared by 2.02 mol of Li₂S, 1.4 mol of LiCl, 0.1 mol of LiBr, 0.49 mol of P₂S₅, and 0.01 mol of Bi₂O₃ was Li_{5.54}P_{0.98}Bi_{0.02}S_{4.47}O_{0.03}Cl_{1.4}Br_{0.1.} Other operations were consistent with Example 3.

### Example 37

The chemical formula of the sulfide solid electrolyte prepared by 2.02 mol of Li₂S, 1.3 mol of LiCl, 0.1 mol of LiBr, 0.1 mol of LiI, 0.49 mol of P₂S₅, and 0.01 mol of Bi₂O₃ was Li_{5.54}P_{0.98}Bi_{0.02}S_{4.47}O_{0.03}Cl_{1.3}Br_{0.1}I_{0.1.} Other operations were consistent with Example 3.

### Example 38

ETFE was selected as the binder, and other operations were consistent with Example 3.

### Example 39

PCTFE was selected as the binder, and other operations were consistent with Example 3.

### Example 40

Preparation of sulfide solid electrolyte: 2 mol of Li₂S, 1.5 mol of LiCl, 0.48 mol of P₂S₅, and 0.02 mol of Sb₂O₅ were milled by high-energy ball milling to obtain precursor powder, wherein the ball-to-material ratio was 30:1 and the rotation speed was 500 rpm. The precursor powder was sintered at 500 °C for 10 h and cooled to obtain Li_{5.5}P_{0.96}Sb_{0.04}S_{4.40}O_{0.10}Cl_{1.5} sulfide solid electrolyte.

Preparation of solid electrolyte membrane: Li_{5.5}P_{0.96}Sb_{0.04}S_{4.40}O_{0.10}Cl_{1.5,} SBR binder, and xylene solvent were mixed evenly in a mass ratio of 49:1:50 to prepare electrolyte slurry, and the electrolyte slurry was scraped onto a smooth aluminum foil using a coater, and then vacuum dried and peeled off at 80 °C to prepare a 30 µm thick solid electrolyte membrane.

Preparation of positive electrode sheet: LiNi_{0.8}Co_{0.1}Mn_{0.1}O₂, conductive agent, Li_{2.35}Zr_{0.65}Fe_{0.35}Cl₅Br_{0.5}I_{0.5}, and PTFE were mixed in a mass ratio of 69:1:29:1 to form a positive electrode sheet by a dry method. The conductive agent was super-P and VGCF in a mass ratio of 1:1.

Negative electrode sheet: the negative electrode sheet was made of metal lithium sheet.

Assembly of all-solid-state battery: the positive electrode sheet, solid electrolyte membrane, and negative electrode sheet prepared above were stacked, packaged, hot-pressed, and cold-pressed to form the all-solid-state soft-pack battery.

Assembly of symmetrical battery: the counter electrode Li was placed at two sides of the solid electrolyte membrane and assembled with the solid electrolyte membrane into a Li/Li symmetrical battery.

### Example 41

PVDF was selected as the binder, and other operations were consistent with Example 40.

### Example 42

PAA was selected as the binder, and other operations were consistent with Example 40.

### Comparative example 1

The chemical formula of the electrolyte prepared by 2 mol of Li₂S, 1.5 mol of LiCl and 0.5 mol of P₂S₅ was Li_{5.5}PS_{4.5}Cl_{1.5.} Other operations were consistent with Example 3.

### Comparative example 2

The chemical formula of the sulfide solid electrolyte prepared by 2 mol of Li₂S, 1.4 mol of LiCl, 0.1 mol of LiBr, and 0.5 mol of P₂S₅ was Li_{5.5}PS_{4.5}Cl_{1.4}Br_{0.1.} Other operations were consistent with Example 3.

### Comparative example 3

The chemical formula of the electrolyte prepared by 2 mol of Li₂S, 1.3 mol of LiCl, 0.1 mol of LiBr, 0.1 mol of LiI, and 0.5 mol of P₂S₅ was Li_{5.5}PS_{4.5}Cl_{1.3}Br_{0.1}I_{0.1.} Other operations were consistent with Example 3.

### Comparative example 4

By adjusting the roller gap of the roller press, the thickness of the solid electrolyte membrane was prepared to be 1 µm, and other operations were consistent with Example 3.

In the invention, different solid electrolyte membranes were used in Examples 1 to 42 and Comparative examples 1 to 4, and the ionic conductivity of the solid electrolyte membranes was tested. After the solid electrolyte membranes were exposed to a dry room at -40 °C for 24 h, the ionic conductivity test was performed again. In the present embodiment, the ionic conductivity was obtained, for example, by an AC impedance method, and the test results are shown in Table 1.

In the invention, different sulfide solid electrolytes were used to obtain lithium-ion batteries in Examples 1 to 42 and Comparative examples 1 to 4. The lithium-ion batteries prepared above were subjected to long-cycle charge and discharge at 25 °C, and the discharge capacity thereof was measured, and the energy density was calculated. In particular, the working voltage range of the battery test was 2.5 V to 4.3 V, the charge and discharge rate was 1C/1C, and the discharge capacity of the first cycle was recorded as the 1C discharge capacity. When the battery capacity reached 80% of the first cycle capacity (80% state of health, 80% SOH), the test was terminated to obtain the cycle number at room temperature. The symmetrical battery was subjected to a constant current charge and discharge cycle test at a current density of 1 mA/cm², and the test results are shown in Table 2.

**Table 1. Ionic conductivity of sulfide solid electrolytes in Examples 1 to 42 and Comparative examples 1 to 4**

| Group | Solid electrolyte membrane electrolyte chemical formula | Solid electrolyte membrane ionic conductivit y (S/cm) | Ionic conductivit y after exposure to -40 °C dry room for 24 h (S/cm) | Ionic conductivi ty retention after exposure to -40 ° C dry room for 24 h | Solid electrolyt e membran e thickness (*µ*m) |
|---|---|---|---|---|---|
| Example 1 | Li_{5.5}P_{0.96}Sb_{0.04}S_{4.40}O_{0.10}Cl_{1.5} | 6.35×10⁻³ | 3.56×10⁻³ | 56.06% | 5 |
| Example 2 | Li_{5.5}P_{0.96}Sb_{0.04}S_{4.40}O_{0.10}Cl_{1.5} | 6.35×10⁻³ | 3.89×10⁻³ | 61.26% | 10 |
| Example 3 | Li_{5.5}P_{0.96}Sb_{0.04}S_{4.40}O_{0.10}Cl_{1.5} | 6.35×10⁻³ | 5.29×10⁻³ | 83.31% | 30 |
| Example 4 | Li_{5.5}P_{0.96}Sb_{0.04}S_{4.40}O_{0.10}Cl_{1.5} | 6.35×10⁻³ | 5.31×10⁻³ | 83.62% | 50 |
| Example 5 | Li_{5.5}P_{0.96}Sb_{0.04}S_{4.40}O_{0.10}Cl_{1.5} | 6.35×10⁻³ | 5.32×10⁻³ | 83.78% | 100 |
| Example 6 | Li_{5.5}P_{0.96}Sb_{0.04}S_{4.40}O_{0.10}Cl_{1.5} | 6.35×10⁻³ | 5.35×10⁻³ | 84.25% | 200 |
| Example 7 | Li_{5.5}P_{0.99}Sb_{0.01}S_{4.475}O_{0.025}Cl_{1.5} | 6.92×10⁻³ | 3.03×10⁻³ | 43.91% | 30 |
| Example 8 | Li_{5.5}P_{0.98}Sb_{0.02}S_{4.45}O_{0.05}Cl_{1.5} | 6.57×10⁻³ | 3.15×10⁻³ | 48.05% | 30 |
| Example 9 | Li_{5.5}P_{0.94}Sb_{0.06}S_{4.35}O_{0.15}Cl_{1.5} | 5.21×10⁻³ | 4.27×10⁻³ | 83.49% | 30 |
| Example 10 | Li_{5.5}P_{0.92}Sb_{0.08}S_{4.3}O_{0.20}Cl_{1.5} | 3.73×10⁻³ | 3.12×10⁻³ | 83.65% | 30 |
| Example 11 | Li_{5.5}P_{0.9}Sb_{0.1}S_{4.25}O_{0.25}Cl_{1.5} | 2.66×10⁻³ | 2.23×10⁻³ | 83.83% | 30 |
| Example 12 | Li_{5.1}P_{0.96}Sb_{0.04}S₄O_{0.10}Cl_{1.9} | 1.06×10⁻³ | 8×10⁻⁴ | 75.47% | 30 |
| Example 13 | Li_{5.9}P_{0.96}Sb_{0.04}S_{4.80}O_{0.10}Cl_{1.1} | 1.16×10⁻³ | 8.9×10⁻⁴ | 76.72% | 30 |
| Example 14 | Li_{5.5}P_{0.96}Sb_{0.04}S_{4.40}O_{0.10}Cl_{1.4}Br_{0.1} | 5.61×10⁻³ | 4.47×10⁻³ | 79.68% | 30 |
| Example 15 | Li_{5.5}P_{0.96}Sb_{0.04}S_{4.40}O_{0.10}Cl_{1.3}Br_{0.1}I_{0.1} | 5.16×10⁻³ | 4.04×10⁻³ | 78.29% | 30 |
| Example 16 | Li_{5.52}P_{0.99}In_{0.01}S_{4.485}O_{0.015}Cl_{1.5} | 7.01×10⁻³ | 3.27×10⁻³ | 46.67% | 30 |
| Example 17 | Li_{5.53}P_{0.985}In_{0.015}S_{4.4775}O_{0.0225}Cl_{1.5} | 6.67×10⁻³ | 3.51×10⁻³ | 52.62% | 30 |
| Example 18 | Li_{5.54}P_{0.98}In_{0.02}S_{4.47}O_{0.03}Cl_{1.5} | 6.44×10⁻³ | 5.3×10⁻³ | 82.30% | 30 |
| Example 19 | Li_{5.58}P_{0.96}In_{0.04}S_{4.44}O_{0.06}Cl_{1.5} | 5.31×10⁻³ | 4.38×10⁻³ | 82.49% | 30 |
| Example 20 | Li_{5.62}P_{0.94}In_{0.06}S_{4.41}O_{0.09}Cl_{1.5} | 4.57×10⁻³ | 3.78×10⁻³ | 82.71% | 30 |
| Example 21 | Li_{5.66}P_{0.92}In_{0.08}S_{4.38}O_{0.12}Cl_{1.5} | 3.83×10⁻³ | 3.17×10⁻³ | 82.77% | 30 |
| Example 22 | Li_{5.7}P_{0.9}In_{0.1}S_{4.35}O_{0.15}Cl_{1.5} | 2.76×10⁻³ | 2.29×10⁻³ | 82.97% | 30 |
| Example 23 | Li_{5.14}P_{0.98}In_{0.02}S_{4.07}O_{0.03}Cl_{1.9} | 1.16×10⁻³ | 9.44×10⁻⁴ | 81.38% | 30 |
| Example 24 | Li_{5.94}P_{0.98}In_{0.02}S_{4.87}O_{0.03}Cl_{1.1} | 1.25×10⁻³ | 1×10⁻³ | 80.00% | 30 |
| Example 25 | Li_{5.54}P_{0.98}In_{0.02}S_{4.47}O_{0.03}Cl_{1.4}Br_{0.1} | 5.71×10⁻³ | 4.48×10⁻³ | 78.46% | 30 |
| Example 26 | Li_{5.54}P_{0.98}In_{0.02}S_{4.47}O_{0.03}Cl_{1.3}Br_{0.1}I_{0.1} | 5.25×10⁻³ | 4.05×10⁻³ | 77.14% | 30 |
| Example 27 | Li_{5.52}P_{0.99}Bi_{0.01}S_{4.485}O_{0.015}Cl_{1.5} | 7.25×10⁻³ | 3.4×10⁻³ | 46.93% | 30 |
| Example 28 | Li_{5.53}P_{0.985}Bi_{0.015}S_{4.4775}O_{0.0225}Cl_{1.5} | 6.91×10⁻³ | 3.52×10⁻³ | 50.94% | 30 |
| Example 29 | Li_{5.54}P_{0.98}Bi_{0.02}S_{4.47}O_{0.03}Cl_{1.5} | 6.68×10⁻³ | 5.4×10⁻³ | 80.84% | 30 |
| Example 30 | Li_{5.58}P_{0.96}Bi_{0.04}S_{4.44}O_{0.06}Cl_{1.5} | 5.55×10⁻³ | 4.5×10⁻³ | 81.08% | 30 |
| Example 31 | Li_{5.62}P_{0.94}Bi_{0.06}S_{4.41}O_{0.09}Cl_{1.5} | 4.81×10⁻³ | 3.91×10⁻³ | 81.29% | 30 |
| Example 32 | Li_{5.66}P_{0.92}Bi_{0.08}S_{4.38}O_{0.12}Cl_{1.5} | 4.07×10⁻³ | 3.31×10⁻³ | 81.33% | 30 |
| Example 33 | Li_{5.7}P_{0.9}Bi_{0.1}S_{4.35}O_{0.15}Cl_{1.5} | 3×10⁻³ | 2.45×10⁻³ | 81.67% | 30 |
| Example 34 | Li_{5.14}P_{0.98}Bi_{0.02}S_{4.07}O_{0.03}Cl_{1.9} | 1.25×10⁻³ | 9.2×10⁴ | 73.60% | 30 |
| Example 35 | Li_{5.94}P_{0.98}Bi_{0.02}S_{4.87}O_{0.03}Cl_{1.1} | 1.3×10⁻³ | 9.9×10⁻⁴ | 76.15% | 30 |
| Example 36 | Li_{5.54}P_{0.98}Bi_{0.02}S_{4.47}O_{0.03}Cl_{1.4}Br_{0.1} | 5.95×10⁻³ | 4.57×10⁻³ | 76.81% | 30 |
| Example 37 | Li_{5.54}P_{0.98}Bi_{0.02}S_{4.47}O_{0.03}Cl_{1.3}Br_{0.1}I_{0.1} | 5.49×10⁻³ | 4.15×10⁻³ | 75.59% | 30 |
| Example 38 | Li_{5.5}P_{0.96}Sb_{0.04}S_{4.40}O_{0.10}Cl_{1.5} | 6.12×10⁻³ | 5.09×10⁻³ | 83.23% | 30 |
| Example 39 | Li_{5.5}P_{0.96}Sb_{0.04}S_{4.40}O_{0.10}Cl_{1.5} | 5.83×10⁻³ | 4.84×10⁻³ | 83.13% | 30 |
| Example 40 | Li_{5.5}P_{0.96}Sb_{0.04}S_{4.40}O_{0.10}Cl_{1.5} | 4.32×10⁻³ | 3.59×10⁻³ | 83.22% | 30 |
| Example 41 | Li_{5.5}P_{0.96}Sb_{0.04}S_{4.40}O_{0.10}Cl_{1.5} | 4.56×10⁻³ | 3.79×10⁻³ | 83.18% | 30 |
| Example 42 | Li_{5.5}P_{0.96}Sb_{0.04}S_{4.40}O_{0.10}Cl_{1.5} | 4.85×10⁻³ | 4.04×10⁻³ | 83.25% | 30 |
| Comparat ive example 1 | Li_{5.5}PS_{4.5}Cl_{1.5} | 7.47×10⁻³ | 8.4×10⁻⁴ | 11.24% | 30 |
| Comparat ive example 2 | Li_{5.5}PS_{4.5}Cl_{1.4}Br_{0.1} | 6.28×10⁻³ | 8.5×10⁻⁴ | 13.54% | 30 |
| Comparat ive example 3 | Li_{5.5}PS_{4.5}Cl_{1.3}Br_{0.1}I_{0.1} | 5.83×10⁻³ | 9.44×10⁻⁴ | 16.19% | 30 |
| Comparat ive example 4 | Li_{5.5}P_{0.96}Sb_{0.04}S_{4.40}O_{0.10}Cl_{1.5} | 6.35×10⁻³ | 2.14×10⁻³ | 33.76% | 1 |

**Table 2. Test results of lithium-ion batteries and symmetrical batteries in Examples 1 to 42 and Comparative examples 1 to 4**

| Group | Normal temperature 1C/1C cycle number (80% SOH) | Cycle time of Li/Li symmetric battery at 1 mA/cm² (h) |
|---|---|---|
| Example 1 | 186 (short circuit) | 427 |
| Example 2 | 231 (short circuit) | 517 |
| Example 3 | 535 | 1125 |
| Example 4 | 502 | 1059 |
| Example 5 | 489 | 1033 |
| Example 6 | 456 | 967 |
| Example 7 | 130 (short circuit) | 315 |
| Example 8 | 259 (short circuit) | 613 |
| Example 9 | 492 | 1039 |
| Example 10 | 439 | 933 |
| Example 11 | 367 | 789 |
| Example 12 | 199 | 453 |
| Example 13 | 208 | 471 |
| Example 14 | 487 | 1029 |
| Example 15 | 453 | 961 |
| Example 16 | 125 (short circuit) | 305 |
| Example 17 | 204 (Short Circuit) | 463 |
| Example 18 | 510 | 1075 |
| Example 19 | 467 | 989 |
| Example 20 | 414 | 883 |
| Example 21 | 342 | 739 |
| Example 22 | 333 | 721 |
| Example 23 | 177 | 409 |
| Example 24 | 186 | 427 |
| Example 25 | 448 | 951 |
| Example 26 | 410 | 875 |
| Example 27 | 116 (short circuit) | 287 |
| Example 28 | 186 (short circuit) | 427 |
| Example 29 | 492 | 1039 |
| Example 30 | 449 | 953 |
| Example 31 | 396 | 847 |
| Example 32 | 324 | 703 |
| Example 33 | 305 | 665 |
| Example 34 | 181 | 417 |
| Example 35 | 190 | 435 |
| Example 36 | 430 | 915 |
| Example 37 | 392 | 839 |
| Example 38 | 530 | 1115 |
| Example 39 | 528 | 1111 |
| Example 40 | *515* | 1085 |
| Example 41 | 518 | 1091 |
| Example 42 | 522 | 1099 |
| Comparative example 1 | 1 (short circuit) | 57 |
| Comparative example 2 | 3 (short circuit) | 61 |
| Comparative example 3 | 4 (short circuit) | 63 |
| Comparative example 4 | 57 (short circuit) | 169 |

Please refer to Table 1 and Table 2. By comparing Examples 1 to 6 and Comparative example 4, it may be seen that as the thickness of the solid electrolyte membrane was increased, the retention rate of the ionic conductivity of the solid electrolyte membrane at low temperatures was increased, and the cycle performance of the lithium-ion battery was first gradually increased and then gradually decreased. And when the solid electrolyte membrane was too thin, battery short circuit occurred whenever the cycle number was lower. Therefore, combined with the retention rate of ionic conductivity and cycle performance, there was an optimal range for the thickness of the solid electrolyte membrane.

Please refer to Table 1 and Table 2. Comparing Examples 3 and 7 to 11 shows that when the M element in the sulfide solid electrolyte adopted Sb, as the doping amount of Sb was increased, the cycle performance of the lithium-ion battery was gradually increased and then gradually decreased. Comparing Examples 16 to 22 shows that when the M element in the sulfide solid electrolyte adopted In, as the doping amount of In was increased, the cycle performance of the lithium-ion battery was gradually increased and then gradually decreased. Comparing Examples 27 to 33, when the M element in the sulfide solid electrolyte adopted Bi, as the doping amount of Bi was increased, the cycle performance of the lithium-ion battery was first gradually increased and then gradually decreased. When the doping amount of Sb, In, or Bi elements was too low, battery short circuit occurred whenever the cycle number was less. And as the doping amount of M element was increased, the ionic conductivity of the sulfide solid electrolyte was decreased, but the ionic conductivity retention rate after exposure to -40 °C dry room for 24h was increased, enhancing the air stability and the chemical stability of the sulfide solid electrolyte, and improving the stability and the performance of the battery. This shows that an appropriate amount of M element doping may help form a stable solid electrolyte interface (SEI) and reduce side reactions between the solid electrolyte and the electrode material. When the doping amount is too low, an effective SEI film may not be formed. Excessive doping causes excessive lattice distortion and destroys the original crystal structure, which may lead to a decrease in the structural stability of the material and even phase separation or amorphization phenomenon, thereby reducing the ionic conductivity of the material. Therefore, controlling the doping amount of M in the sulfide solid electrolyte may improve the cycle life and the safety of the all-solid-state lithium-ion battery, and at the same time maintain the ionic conductivity at a higher level, ensuring the rate performance of the lithium-ion battery, and improving the charge and discharge efficiency and the cycle life.

As shown in Table 1 and Table 2, by comparing Examples 3, 12 to 13, Examples 18, 23 to 24, and Examples 29, 34 to 35, it may be seen that when the doping amount of Sb, In, or Bi was the same, increasing or decreasing the Cl element content caused a significant decrease in ionic conductivity, and always reduced the cycle performance of the lithium-ion battery. Therefore, the content of the Cl element was controlled to ensure the ionic conductivity of the sulfide solid electrolyte and the performance of the lithium-ion battery.

Please refer to Table 1 and Table 2. By comparing Examples 3, 14 to 15, Examples 18, 25 to 26, and Examples 29, 36 to 37, it may be seen that when the doping amount of Sb, In, or Bi was the same, the addition of one or a plurality of Br or I elements always reduced the cycle performance of the battery. This is because the added Br or I may introduce additional lattice defects, and these defects may become obstacles to lithium ion transmission and further reduce the ionic conductivity of the electrolyte. Therefore, X adopted Cl element to improve the ionic conductivity and the electrochemical stability of the sulfide solid electrolyte and improve the voltage stability.

Please refer to Table 1 and Table 2. Comparison of Examples 3, 14 to 15, Examples 18, 25 to 26, Examples 29, 36 to 37, and Comparative examples 1 to 3 shows that when the M element and the O element were not added to the sulfide solid electrolyte, the lithium-ion battery had almost no cycle performance and a short circuit occurred quickly, indicating that when the M element and the O element were missing, the chemical stability of the sulfide solid electrolyte material was poor, the mechanical strength was insufficient, and it was difficult to ensure the long-term cycle performance of the lithium-ion battery. By introducing the M element and the O element, the cycle performance of the lithium-ion battery could be improved.

Please refer to Table 1 and Table 2. Comparing Examples 3 and 38 to 39 shows that in the dry preparation process, when different first binders were selected, the ionic conductivity of the solid electrolyte membrane and the performance of the lithium-ion battery were also affected. When the first binder was selected from PTFE, the ionic conductivity of the solid electrolyte membrane and the performance of the lithium-ion battery were optimal. Comparing Examples 40 to 42 shows that in the wet preparation process, when different second binders are selected, the ionic conductivity of the solid electrolyte membrane and the performance of the lithium-ion battery were also affected. When the second binder was selected from PAA, the ionic conductivity of the solid electrolyte membrane and the performance of the lithium-ion battery were optimal. Comparing Examples 3 and 40 shows that the solid electrolyte membrane prepared by the dry process was better than the solid electrolyte membrane prepared by the wet process. This is because a large amount of organic solvents was used in the wet process, and the organic solvents reacted slightly with the electrolyte, thereby reducing the performance of the electrolyte membrane, and the dry process did not introduce solvents.

Please refer to FIG. 2. During the room temperature cycle process of the all-solid-state lithium-ion battery in Example 3, the current density used for constant current charging and discharging was 1C. It may be seen from FIG. 2 that at a current density of 1C, the all-solid-state lithium-ion battery in Example 3 still had an energy storage capacity of about 150 mAh/g after 500 cycles, indicating that the sulfide solid electrolyte had excellent reaction kinetics and cycle stability, and the resulting solid electrolyte membrane had a good gain effect on the cycle stability and the reaction activity specific capacity of the battery. The all-solid-state lithium-ion battery had excellent performance such as specific capacity, rate performance, cycle life.

The invention also provides an electronic apparatus. The electronic apparatus includes at least one of the above lithium-ion battery, and the lithium-ion battery is used to provide electrical energy. In particular, the electronic apparatus may be a vehicle, a mobile phone, a portable equipment, a laptop computer, a ship, a spacecraft, an electric toy, and an electric tool, etc. In an embodiment of the invention, the vehicle is, for example, a new energy vehicle, and the new energy vehicle may be a pure electric vehicle, a hybrid vehicle, or an extended-range vehicle, etc. The spacecraft includes an airplane, a rocket, a space shuttle, and a space vehicle, etc. The electric toy includes a fixed or mobile electric toy, such as a game console, an electric car toy, an electric ship toy, and an electric airplane toy, etc. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer, etc. The electronic apparatus includes the above lithium-ion battery, so the advantages of the above lithium-ion battery are included, which are not elaborated here.

Based on the above, the invention provides the solid electrolyte membrane and the preparation method and application thereof, thus increasing the intrinsic resistance of the solid electrolyte membrane to atmospheric degradation, effectively reducing the generation of H₂S, increasing the possibility of the battery in actual production, and thus enhancing the air stability and the chemical stability of the sulfide solid electrolyte. LiCl, Li₂O, and alloys such as Li-Sb/Li-Bi/Li-In may be formed in the electrolyte/lithium metal negative electrode interface layer, the electric field may be uniform, the local current density may be balanced, thereby regulating the nucleation and the growth of Li, so as to effectively inhibit the rapid growth of lithium dendrites at the growth interface, and significantly improve the stability and the performance of the lithium-ion battery, and improve the life and the safety of the all-solid-state lithium-ion battery. Therefore, the solid electrolyte membrane has higher stability and specific reactivity to improve the stability of the conductivity of the solid electrolyte membrane, enhance air stability and improve electrolyte/active material interface properties, thereby improving compatibility with the active material.

## Claims

1. A solid electrolyte membrane, at least comprising:
a binder; and
a sulfide solid electrolyte, wherein a molecular formula of the sulfide solid electrolyte is LiₐP_{1-b}M_{b}S_{c}O_{d}Xₑ; wherein 5<a<6, 0<b<1, 1.5<c<5, 0<d<2.5, 4<c+d<5, 1<e<2; M is selected from one or a plurality of Al, Ga, In, Ti, Sc, As, Sb, Bi, V, or Nb; X is selected from one or a plurality of Cl, Br, or I;
an ionic conductivity of the solid electrolyte membrane is 1×10⁻³ S/cm to 2×10⁻² S/cm.

2. The solid electrolyte membrane of claim 1, wherein M is one or a plurality of Sb, In, or Bi.

3. The solid electrolyte membrane of claim 1, wherein X is Cl; and a value range of b is 0<b≤0.1.

4. The solid electrolyte membrane of claim 1, wherein a thickness of the solid electrolyte membrane is 1 µm to 200 µm.

5. The solid electrolyte membrane of claim 1, wherein a mass ratio of the binder to the sulfide solid electrolyte is 0.1:99.9 to 10:90.

6. A preparation method of the solid electrolyte membrane of claim 1, comprising steps of:
mixing raw materials evenly according to a stoichiometric amount and placing in a ball mill for ball milling according to a chemical formula of a sulfide solid electrolyte to obtain a sulfide solid electrolyte precursor powder;
calcining the sulfide solid electrolyte precursor powder at a preset temperature to obtain the sulfide solid electrolyte; and
mixing the sulfide solid electrolyte with a binder, and the solid electrolyte membrane is prepared by a dry method or a wet method.

7. The preparation method of the solid electrolyte membrane of claim 6, wherein the raw materials comprise a Li source, a P source, an M source, a S source, and an X source, the Li source is selected from one or a plurality of LiCl, LiBr, LiI, or Li₂S; the P source is selected from one or a plurality of elemental P, P₂S₅, P₄S₆, PCl₅, or PBr₅; the M source is selected from one or a plurality of an oxide of M or a sulfide of M; the S source is selected from one or a plurality of elemental S, Li₂S, P₂S₅, P₄S₆, As₂S₅, As₂S₃, Sb₂S₅, Sb₂S₃, Bi₂S₅, Bi₂S₃, Ga₂S₃, In₂S₃, or Sc₂S₃; the X source is selected from one or a plurality of LiCl, PCl₅, LiBr, PBr₅, LiI, or I₂; the O element in the chemical formula comes from the oxide of M.

8. The preparation method of the solid electrolyte membrane of claim 6, wherein when the solid electrolyte membrane is prepared by the dry method, the binder is selected from a first binder, and the first binder is selected from one or a plurality of polytetrafluoroethylene, ethylene-tetrafluoroethylene copolymer, fluorinated ethylene-propylene copolymer, perfluoroalkoxy resin, polychlorotrifluoroethylene, ethylene-chlorotrifluoroethylene copolymer, polyvinylidene fluoride, polyvinylidene fluoride-hexafluoropropylene copolymer, or polyvinylidene fluoride-chlorotrifluoroethylene copolymer.

9. The preparation method of the solid electrolyte membrane of claim 6, wherein when the solid electrolyte membrane is prepared by the wet method, the binder is selected from a second binder, and the second binder is selected from one or a plurality of polyvinylidene fluoride, carboxymethyl cellulose, styrene-butadiene rubber, polyvinyl pyrrolidone, polymethyl methacrylate, polyacrylonitrile, polyacrylic acid, polyurethane, polyvinyl alcohol, sodium alginate, ethylene-propylene-diene monomer, styrene-butadiene rubber, fluororubber, *β*-cyclodextrin polymer, polypropylene emulsion, polytetrafluoroethylene, ethylene-tetrafluoroethylene copolymer, fluorinated ethylene-propylene copolymer, perfluoroalkoxy resin, polychlorotrifluoroethylene, ethylene-chlorotrifluoroethylene copolymer, polyvinylidene fluoride-hexafluoropropylene copolymer, or polyvinylidene fluoride-chlorotrifluoroethylene copolymer.

10. An all-solid-state lithium-ion battery, at least comprising:
a positive electrode sheet, wherein the positive electrode sheet comprises a halide solid electrolyte, wherein the halide solid electrolyte comprises Li_{2.35}Zr_{0.65}Fe_{0.35}Cl₅Br_{0.5}I_{0.5};
a negative electrode sheet; and
a solid electrolyte membrane, wherein the solid electrolyte membrane is disposed between the adjacent positive electrode sheet and the negative electrode sheet, and the solid electrolyte membrane is selected from the solid electrolyte membrane of any of claims 1 to 5.

11. An electronic apparatus, comprising the all-solid-state lithium-ion battery of claim 10.
